# EUROPEAN PATENT APPLICATION

(11) **EP 4 657 609 A1**
(43) Date of publication of application: **03.12.2025**
(21) Application number: 23923268.9
(22) Date of filing: 21.02.2023
(51) Int. Cl.: H01M 10/654, H01M 10/615, H01M 10/0525

(54) **SECONDARY BATTERY AND ELECTRONIC DEVICE**

(71) Applicant: Xiamen Ampace Technology Limited, Xiamen City, Fujian Province 361000 (CN); Ningde Amperex Technology Limited, Ningde City, Fujian Province 352100 (CN)
(72) Inventor: JIANG, Xin, Xiamen, Fujian 361000 (CN); ZHANG, Yuanbing, Xiamen, Fujian 361000 (CN); WANG, Huixin, Xiamen, Fujian 361000 (CN)
(74) Representative: Icosa
(86) International application number: PCT/CN2023/077362
(87) International publication number: WO 2024/174084

(57) **Abstract**

This application provides a secondary battery and an electronic device. In the secondary battery, an electrode assembly is accommodated in a packaging bag. One end of an electrode terminal is electrically connected to the electrode assembly, and another end of the electrode terminal extends out of the packaging bag. A heating module includes an insulation layer as well as a body portion, a sealing portion, and an extension portion sequentially connected, where the body portion is disposed in the electrode assembly or between the electrode assembly and the packaging bag, the sealing portion is disposed in the packaging bag, the extension portion is disposed outside the packaging bag, and the insulation layer entirely covers an outer surface of the body portion. A sealing layer is at least partially disposed on a surface of the sealing portion and hermetically connected to the packaging bag. In a thickness direction of the heating module, an overlapping region is present between the insulation layer and the sealing layer. In the overlapping region, the insulation layer is hermetically connected to the sealing layer, and the insulation layer is located between the body portion and the sealing layer. Along a length direction of the electrode assembly, a length of the overlapping region is Δh, a length of the sealing layer is h, and 0.1 mm≤Δh≤h. The secondary battery in this application has good cycling performance.

## Description

### TECHNICAL FIELD

This application relates to the field of electrochemical technologies, and in particular, to a secondary battery and an electronic device.

### BACKGROUND

Secondary batteries such as lithium-ion batteries experience a sharp increase in polarization at low temperatures. To ensure that the lithium-ion batteries have no lithium precipitation, the lithium-ion batteries can only be charged at a low rate, which extends the waiting time and significantly affects the customer experience. In addition, the high-rate discharge performance at low temperatures deteriorates significantly, which undoubtedly limits the application of traction battery products. For example, in the cold weather of the northern winter, the ranges of electric vehicles are significantly reduced, and short-distance transportation tools such as electric bicycles can hardly meet the commuting needs of families. Outdoor products such as drones that require high-power startup are not easily used normally.

Currently, a preferred method to address the application issue of lithium-ion batteries at low temperatures is to heat the lithium-ion batteries to a temperature where they can be charged and discharged normally. Among various heating methods such as air circulation, water circulation, external heating films, and pulse heating, a heating method that provides an optimal heating effect and causes the least damage to the lithium-ion batteries is to introduce heating units into the lithium-ion batteries, which is a self-heating technology.

### SUMMARY

In the prior art, a heating unit is introduced into a lithium-ion battery, where the heating unit has poor insulation, which results in corrosion on the heating unit during heating.

This application is intended to provide a secondary battery and an electronic device, so as to achieve the integrated insulation of a heating module, thereby reducing a corrosion proportion generated by the heating module of the secondary battery during heating, and improving the cycling performance of the secondary battery.

It should be noted that in the specification of this application, an example in which a lithium-ion battery is used as a secondary battery is used to illustrate this application. However, the secondary battery in this application is not limited to the lithium-ion battery. Specific technical solutions are described as follows.

According to a first aspect of this application, a secondary battery is provided and includes an electrode assembly, an electrode terminal, a heating module, and a sealing layer. The electrode assembly is accommodated in a packaging bag. One end of the electrode terminal is electrically connected to the electrode assembly, and another end of the electrode terminal extends out of the packaging bag. The heating module includes an insulation layer as well as a body portion, a sealing portion, and an extension portion sequentially connected, where the body portion is disposed in the electrode assembly or between the electrode assembly and the packaging bag, the sealing portion is disposed in the packaging bag, the extension portion is disposed outside the packaging bag, and the insulation layer entirely covers an outer surface of the body portion. The sealing layer is at least partially disposed on a surface of the sealing portion and hermetically connected to the packaging bag. An overlapping region is present between the insulation layer and the sealing layer; and in the overlapping region, the insulation layer is hermetically connected to the sealing layer, and the insulation layer is located between the body portion and the sealing layer. Along a length direction of the electrode assembly, a length of the overlapping region is Δh, a length of the sealing layer is h, and 0.1 mm≤Δh≤h. Preferably, h/2≤Δh≤h. Controlling the length of the overlapping region within the range of this application allows the heating module in the electrode assembly to achieve the integrated insulation. Thus, the problem of corrosion on the heating module caused by a heating circuit in the secondary battery can be alleviated, thereby improving the cycling performance of the secondary battery.

In some embodiments of this application, 4 mm≤h≤8 mm. Controlling the length h of the sealing layer within the above range is conducive to allowing the heating module to achieve the integrated insulation while reducing the production cost, thereby improving the cycling performance and safety performance of the secondary battery.

In some embodiments of this application, a melting point of the insulation layer is T₁, a melting point of the sealing layer is T₂, ΔT=|T₁-T₂|, and 0°C≤ΔT≤30°C. Preferably, 0°C≤ΔT≤15°C. Controlling the melting point difference ΔT between the insulation layer and the sealing layer within the above range is conducive to improving the cycling performance and safety performance of the secondary battery.

In some embodiments of this application, 100°C≤T₁≤160°C, or 110°C≤T₂≤160°C. Preferably, 120°C≤T₁≤150°C, or 120°C≤T₂≤150°C. Controlling the melting point T₁ of the insulation layer or the melting point T₂ of the sealing layer within the above range is conducive to improving the cycling performance and safety performance of the secondary battery.

In some embodiments of this application, a thermal shrinkage rate of the insulation layer is 0% to 3%. Controlling the thermal shrinkage rate of the insulation layer within the above range is conducive to improving the cycling performance and safety performance of the secondary battery.

In some embodiments of this application, the electrode terminal includes a positive electrode terminal and a negative electrode terminal; the extension portion is located between the positive electrode terminal and the negative electrode terminal, and the extension portion includes a first extension portion and a second extension portion, where the first extension portion is adjacent to the positive electrode terminal, and the second extension portion is adjacent to the negative electrode terminal; the sealing layer is disposed on surfaces of both the first extension portion and the second extension portion; and along a width direction of the electrode assembly, a width of the sealing layer is L, a maximum distance between the first extension portion and the second extension portion is L₁, a maximum distance between the positive electrode terminal and the negative electrode terminal is L₂, and L₁<L<L₂. Controlling the relationship of L, L₁, and L₂ within the above range is conducive to achieving a good sealing effect on the electrode terminal of the secondary battery, thereby reducing the risk of leakage of an electrolyte in the secondary battery.

In some embodiments of this application, the electrode terminal includes a positive electrode terminal and a negative electrode terminal; the extension portion is located between the positive electrode terminal and the negative electrode terminal, and the extension portion includes a first extension portion and a second extension portion, where the first extension portion is adjacent to the positive electrode terminal, and the second extension portion is adjacent to the negative electrode terminal; and the sealing layer includes a first sealing layer and a second sealing layer, where the first sealing layer is disposed on a surface of the first extension portion, and the second sealing layer is disposed on a surface of the second extension portion. Along a width direction of the electrode assembly, a width of the first sealing layer is L_{A}, a width of the first extension portion is L_{A1}, a minimum distance between the positive electrode terminal and the second extension portion is L_{A2}, and L_{A1}<L_{A}<L_{A2}; and a width of the second sealing layer is L_{B}, a width of the second extension portion is L_{B1}, a minimum distance between the negative electrode terminal and the first extension portion is L_{B2}, and L_{B1}<L_{B}<L_{B2}. Controlling the relationship of L_{A}, L_{A1}, and L_{A2} and the relationship of L_{B}, L_{B1}, and L_{B2} within the above ranges is conducive to achieving a good sealing effect on the electrode terminal of the secondary battery, thereby reducing the risk of leakage of the electrolyte in the secondary battery.

In some embodiments of this application, a thickness of each of the body portion, the sealing portion, and the extension portion is t₁, and 10 µm≤t₁≤300 µm; or a total thickness of the insulation layer is t₂, and 10 µm≤t₂≤300 µm; or a thickness of the sealing layer is t₃, and 0.05 mm≤t₃≤1 mm. Preferably, 20 µm≤t₁≤50 µm, 10 µm≤t₂≤150 µm, and 0.08 mm≤t₃≤0.2 mm. Controlling the thickness of each of the body portion, the sealing portion, and the extension portion, the total thickness t₂ of the insulation layer, and the thickness t₃ of the sealing layer within the above ranges allows the secondary battery to have good cycling performance and high energy density at low temperatures.

In some embodiments of this application, a material of each of the body portion and the sealing portion includes at least one of nickel, nickel-aluminum alloy, copper, copper alloy, polyimide, silicone, paraffin-expanded graphite composite, calcium chloride hydrate, or sodium sulfate hydrate. A material of the insulation layer includes at least one of unmodified polypropylene, transparent modified polypropylene, high melt strength polypropylene, polyethylene, low-density polyethylene, linear low-density polyethylene, polyvinylidene fluoride-hexafluoropropylene, polyvinylidene fluoride, polyacrylonitrile, polymethyl methacrylate, polyphenylene oxide, polypropylene carbonate, polyethylene oxide, polyimide, unmodified polyamide, polypeptide-modified polyamide, polyethylene glycol-modified polyamide, epoxy resin, polyurethane, amino resin, phenolic resin, acrylic resin, furan resin, resorcinol-formaldehyde resin, xylene-formaldehyde resin, vinyl resin, epoxy resin, phenolic resin, polyurethane ethyl carbamate, urea formaldehyde resin adhesive, ethylene-vinyl acetate copolymer, copolyamide, polyethylene terephthalate, styrene-butadiene-styrene block copolymer, styrene-isoprene-styrene block copolymer, reactive polyurethane, acetal resin, neoprene rubber, polyvinyl chloride, polybutene, or styrene-butadiene rubber. A material of the sealing layer includes at least one of unmodified polypropylene, crosslinked modified polypropylene, polyethylene, ethylene-butene copolymer, ethylene-isoprene copolymer, propylene-butene copolymer, or propylene-isoprene copolymer. The selection of the above types of materials is conducive to improving the cycling performance and safety performance of the secondary battery.

According to a second aspect of this application, an electronic device is provided and includes a switch and the secondary battery according to any one of the foregoing embodiments, where the switch is electrically connected to the extension portion; in response to a temperature of the secondary battery being lower than a threshold, the switch is turned on, and the heating module heats the secondary battery; and in response to the temperature of the secondary battery being higher than the threshold, the switch is turned off to stop heating.

In some embodiments of this application, the threshold is -15°C to 70°C.

Further, when the electronic device is applied to a low-temperature product, the threshold is 0°C to 25°C; and when the electronic device is applied to a fast charging product, the threshold is 30°C to 60°C.

In this application, the secondary battery and the electronic device are provided, where the secondary battery includes the electrode assembly, the electrode terminal, the heating module, the sealing layer, and the packaging bag. The electrode assembly is accommodated in the packaging bag. One end of the electrode terminal is electrically connected to the electrode assembly, and another end of the electrode terminal extends out of the packaging bag. The heating module includes the insulation layer as well as the body portion, the sealing portion, and the extension portion sequentially connected, where the body portion is disposed in the electrode assembly or between the electrode assembly and the packaging bag, the sealing portion is disposed in the packaging bag, the extension portion is disposed outside the packaging bag, and the insulation layer entirely covers the outer surface of the body portion. The sealing layer is at least partially disposed on the surface of the sealing portion and hermetically connected to the packaging bag. The overlapping region is present between the insulation layer and the sealing layer. In the overlapping region, the insulation layer is hermetically connected to the sealing layer, and the insulation layer is located between the body portion and the sealing layer. In the length direction of the electrode assembly, the length of the overlapping region is Δh, the length of the sealing layer is h, and 0.1 mm≤Δh≤h. Controlling the length of the overlapping region within the range of this application allows the heating module in the electrode assembly to achieve the integrated insulation. Thus, the problem of corrosion on the heating module caused by the heating circuit in the secondary battery can be alleviated, thereby improving the cycling performance of the secondary battery.

### BRIEF DESCRIPTION OF DRAWINGS

The accompanying drawings described herein are intended for a further understanding of this application and constitute a part of this application. Illustrative embodiments of this application and descriptions thereof are intended to explain this application, and do not constitute any inappropriate limitation on this application.
FIG. 1 is a schematic structural diagram of an electrode assembly according to some embodiments of this application;
FIG. 2 is a schematic structural diagram of a secondary battery according to some embodiments of this application;
FIG. 3 is a schematic partial structural diagram of the secondary battery along direction B-B according to some embodiments in FIG. 2;
FIG. 4 is a schematic partial structural diagram of a secondary battery according to some embodiments of this application;
FIG. 5 is a schematic structural diagram of a secondary battery according to some other embodiments of this application; and
FIG. 6 is a schematic structural diagram of a heating module according to some embodiments of this application.

### DETAILED DESCRIPTION

To make the objectives, technical solutions, and advantages of this application more comprehensible, the following describes this application in detail with reference to the accompanying drawings and some embodiments. Apparently, the described embodiments are merely some rather than all of these embodiments of this application. All other embodiments obtained by persons of ordinary skill in the art based on these embodiments of this application shall fall within the protection scope of this application.

It should be noted that in specific embodiments of this application, an example in which a lithium-ion battery is used as a secondary battery is used to illustrate this application. However, the secondary battery in this application is not limited to the lithium-ion battery. Specific technical solutions are described as follows.

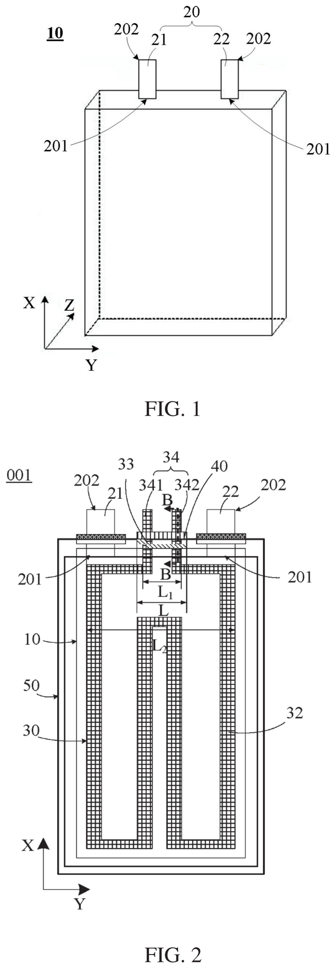

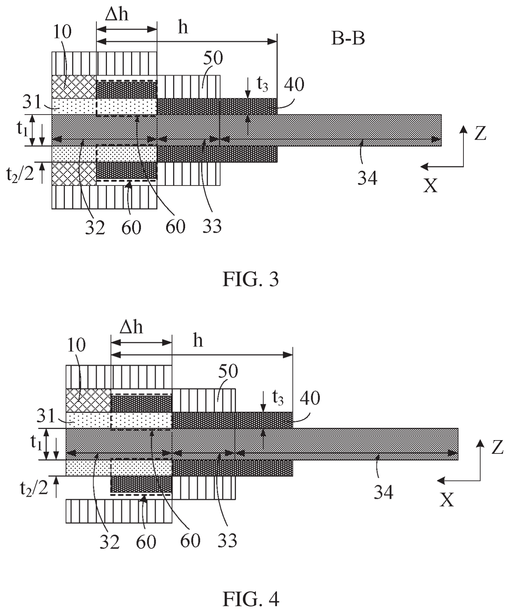

Referring to FIG. 1 to FIG. 5, according to a first aspect of this application, a secondary battery 001 is provided and includes an electrode assembly 10, an electrode terminal 20, a heating module 30, a sealing layer 40, and a packaging bag 50. For example, FIG. 1 shows an electrode assembly 10 according to some embodiments of this application. For ease of understanding, a three-dimensional rectangular coordinate system is established by taking a length direction of the electrode assembly 10 as a direction X, a width direction of the electrode assembly 10 as a direction Y, and a thickness direction of the electrode assembly 10 as a direction Z. It should be understood that a length direction of each of the secondary battery 001 and the heating module 30 is the same as the length direction (the direction X) of the electrode assembly 10, a width direction of each of the secondary battery 001 and the heating module 30 is the same as the width direction (the direction Y) of the electrode assembly 10, and a thickness direction of each of the secondary battery 001 and the heating module 30 is the same as the thickness direction (the direction Z) of the electrode assembly 10. The electrode assembly 10 is accommodated in the packaging bag 50. One end 201 of the electrode terminal 20 is electrically connected to the electrode assembly 10, and another end 202 of the electrode terminal 20 extends out of the packaging bag 50. The heating module 30 includes an insulation layer 31 as well as a body portion 32, a sealing portion 33, and an extension portion 34 sequentially connected, where the body portion 32 is disposed in the electrode assembly 10 (as shown in FIG. 3) or between the electrode assembly 10 and the packaging bag 50 (as shown in FIG. 4), the sealing portion 33 is disposed in the packaging bag 50, the extension portion 34 is disposed outside the packaging bag 50, and the insulation layer 31 entirely covers an outer surface of the body portion 32. The sealing layer 40 is at least partially disposed on a surface of the sealing portion 33 and hermetically connected to the packaging bag 50. An overlapping region 60 is present between the insulation layer 31 and the sealing layer 40. In the overlapping region 60, the insulation layer 31 is hermetically connected to the sealing layer 40, and the insulation layer 31 is located between the body portion 32 and the sealing layer 40. In the length direction as the direction X of the electrode assembly 10, a length of the overlapping region 60 is Δh, a length of the sealing layer 40 is h, and 0.1 mm≤Δh≤h.

The above "an overlapping region 60 is present between the insulation layer 31 and the sealing layer 40" can alternatively be understood as that in a direction of the electrode terminal 20 extending out of the packaging bag 50, the insulation layer 31 entirely covers the outer surface of the body portion 32 and extends beyond an end portion of the body portion 32 to form the overlapping region 60 with the sealing layer 40 disposed on the surface of the sealing portion 33. This application is not limited thereto.

The above "the body portion 32 is disposed in the electrode assembly 10 or between the electrode assembly 10 and the packaging bag 50" can be understood as that in some embodiments of this application, the body portion 32 is disposed in the electrode assembly 10. For example, in some embodiments of this application, the body portion 32 is located between a positive electrode plate and a separator. In some other embodiments of this application, the body portion 32 is located between a negative electrode plate and the separator. In some embodiments of this application, referring to FIG. 4, the body portion 32 is disposed between the electrode assembly 10 and the packaging bag 50. Specifically, in some embodiments of this application, the body portion 32 is disposed between a surface formed by the electrode assembly 10 along the direction X and the direction Y and the packaging bag 50.

The heating module 30 of an electron-ion conduction system completely independent of the secondary battery 001 is introduced into the secondary battery 001 in this application. The insulation layer 31 of the heating module 30 entirely covers the outer surface of the body portion 32, allowing the body portion 32 to have good insulation. The overlapping region 60 is present between the insulation layer 31 and the sealing layer 40. When the length Δh of the overlapping region 60 is less than 0.1 mm, the area of the overlapping region 60 is excessively small, and the corrosion resistance life of the overlapping region 60 is shorter. Specifically, a composite effect of the insulation layer 31 and the sealing layer 40 in the overlapping region 60 is weak, and materials of the insulation layer 31 and the sealing layer 40 are prone to failure in an electrolyte. After failure, when the materials are heated for use, the overlapping region 60 is prone to corrosion. When the corrosion reaches a certain extent, a corrosion point of the overlapping region 60 is fractured, the impedance of the secondary battery 001 increases rapidly, a heating voltage quickly reaches an upper limit, and the secondary battery 001 stops charge and discharge cycles. When the length Δh of the overlapping region 60 is greater than h, the cycle life of the secondary battery 001 is basically no longer extended, and the production cost is increased. Controlling the length Δh of the overlapping region 60 within the above range allows the overlapping region 60 to have a long corrosion resistance life while reducing the production cost, and allows the heating module 30 to achieve the integrated insulation. When an ambient temperature is lower than a threshold, the heating module 30 heats the secondary battery by self-heating, alleviating the problem that the secondary battery 001 cannot be charged and discharged normally at low temperatures, thereby enhancing the endurance of the secondary battery 001. In addition, this can also alleviate the safety problems of the secondary battery 001 such as spontaneous combustion or explosion caused by thermal runaway due to lithium precipitation during charge and discharge at low temperatures. Thus, the problem of corrosion on the heating module 30 caused by a heating circuit in the secondary battery 001 can be alleviated, thereby improving the cycling performance and safety performance of the secondary battery 001.

Preferably, h/2≤Δh≤h. Controlling the length Δh of the overlapping region 60 within the above preferred range allows the overlapping region 60 to have a longer corrosion resistance life while reducing the production cost, and allows the heating module 30 to achieve the integrated insulation. Thus, the problem of corrosion on the heating module 30 caused by the heating circuit in the secondary battery 001 can be further alleviated, thereby further improving the cycling performance and safety performance of the secondary battery 001.

Further, 0.1 mm≤Δh≤8 mm.

The shape of the heating module is not particularly limited in this application, provided that the objectives of this application can be achieved. For example, the shape of the heating module is a grid shape, a zigzag shape, or the like, so that an electron transmission distance is increased to reduce an electron transmission aperture, thereby increasing the internal resistance.

In some embodiments of this application, 4 mm≤h≤8 mm. For example, h is 4 mm, 5 mm, 6 mm, 7 mm, 8 mm, or any value within a range defined by any two of these values. Controlling the length h of the sealing layer within the above range is conducive to allowing the heating module to achieve the integrated insulation while reducing the production cost. Thus, the problem of corrosion on the heating module caused by the heating circuit in the secondary battery can be alleviated, thereby improving the cycling performance and safety performance of the secondary battery.

In some embodiments of this application, a melting point of the insulation layer is T₁, a melting point of the sealing layer is T₂, ΔT=|T₁-T₂|, and 0°C≤ΔT≤30°C. Preferably, 0°C≤ΔT≤15°C. For example, ΔT is 0°C, 5°C, 10°C, 15°C, 20°C, 25°C, 30°C, or any value within a range defined by any two of these values. Controlling the melting point difference ΔT between the insulation layer and the sealing layer within the above range is conducive to achieving good adhesion between the insulation layer and the sealing layer in the overlapping region, thereby reducing the corrosion risk in the overlapping region and allowing the heating module to achieve the integrated insulation. Thus, the problem of corrosion on the heating module caused by the heating circuit in the secondary battery can be alleviated, thereby improving the cycling performance and safety performance of the secondary battery. When the melting point difference ΔT between the insulation layer and the sealing layer is controlled within the above preferred range, the cycling performance and safety performance of the secondary battery are better.

In some embodiments of this application, 100°C≤T₁≤160°C. Preferably, 120°C≤T₁≤150°C. For example, T₁ is 100°C, 110°C, 115°C, 120°C, 130°C, 140°C, 150°C, 155°C, 160°C, or any value within a range defined by any two of these values. Controlling the melting point T₁ of the insulation layer within the above range ensures that a thermal shrinkage rate of a material of the insulation layer is small during the heat sealing of the insulation layer and the heat sealing layer in the overlapping region, reducing the risk of corrosion caused by the exposure of metal in the overlapping region of the heating module to the electrolyte in the packaging bag due to a large thermal shrinkage rate. In addition, the heat sealing time is short, and the production efficiency can be improved. Moreover, the adhesion between the insulation layer and the sealing layer is also improved, the corrosion resistance life of the overlapping region is extended, and the risk of electrolyte leakage is reduced. Thus, the problem of corrosion on the heating module caused by the heating circuit in the secondary battery can be alleviated, thereby improving the cycling performance and safety performance of the secondary battery.

In some embodiments of this application, 110°C≤T₂≤160°C. Preferably, 120°C≤T₂≤150°C. For example, T₂ is 110°C, 115°C, 120°C, 130°C, 140°C, 150°C, 155°C, 160°C, or any value within a range defined by any two of these values. Controlling the melting point T₂ of the sealing layer within the above range allows the melting point difference ΔT between the insulation layer and the sealing layer to be controlled within the range of this application, and is conducive to achieving good adhesion between the insulation layer and the sealing layer in the overlapping region, thereby reducing the corrosion risk in the overlapping region and allowing the heating module to achieve the integrated insulation. Thus, the problem of corrosion on the heating module caused by the heating circuit in the secondary battery can be alleviated, thereby improving the cycling performance and safety performance of the secondary battery.

In some embodiments of this application, a thermal shrinkage rate of the insulation layer is 0% to 3%. For example, the thermal shrinkage rate of the insulation layer is 0%, 0.5%, 1%, 1.5%, 2%, 2.5%, 3%, or any value within a range defined by any two of these values. Controlling the thermal shrinkage rate of the insulation layer within the above range is conducive to improving the adhesion between the insulation layer and the sealing layer, extending the corrosion resistance life of the overlapping region, and allowing the heating module to achieve the integrated insulation. Thus, the problem of corrosion on the heating module caused by the heating circuit in the secondary battery can be alleviated, thereby improving the cycling performance and safety performance of the secondary battery. In some other embodiments, the thermal shrinkage rate of the insulation layer is 1% to 2%.

The control method of the thermal shrinkage rate of the insulation layer is not particularly limited in this application, provided that the objectives of this application can be achieved. For example, the material of the insulation layer is adjusted such that the thermal shrinkage rate of the insulation layer is changed.

In some embodiments of this application, as shown in FIG. 2, the electrode terminal 20 includes a positive electrode terminal 21 and a negative electrode terminal 22. The extension portion 34 is located between the positive electrode terminal 21 and the negative electrode terminal 22, and the extension portion 34 includes a first extension portion 341 and a second extension portion 342, where the first extension portion 341 is adjacent to the positive electrode terminal 21, and the second extension portion 342 is adjacent to the negative electrode terminal 22. The sealing layer 40 is disposed on surfaces of both the first extension portion 341 and the second extension portion 342. In the width direction as the direction Y of the electrode assembly 10, a width of the sealing layer 40 is L, a maximum distance between the first extension portion 341 and the second extension portion 342 is L₁, a maximum distance between the positive electrode terminal 21 and the negative electrode terminal 22 is L₂, and L₁<L<L₂. In this application, L is related to a width of the secondary battery and a width of the electrode terminal, and can be selected by persons skilled in the art based on actual situations, provided that the objectives of this application can be achieved. L₁ and L₂ are not particularly limited in this application, provided that the objectives of this application can be achieved. For example, L₂=width of electrode assembly-width of positive electrode terminal-width of negative electrode terminal-6 mm, where 6 mm typically refers to the sum of a minimum distance between the positive electrode terminal and an edge of the electrode assembly and a minimum distance between the negative electrode terminal and the edge of the electrode assembly in the width direction as the direction Y. Controlling the relationship of L, L₁, and L₂ within the above range is conducive to achieving a good sealing effect on the electrode terminal of the secondary battery, thereby reducing the risk of leakage of the electrolyte in the secondary battery.

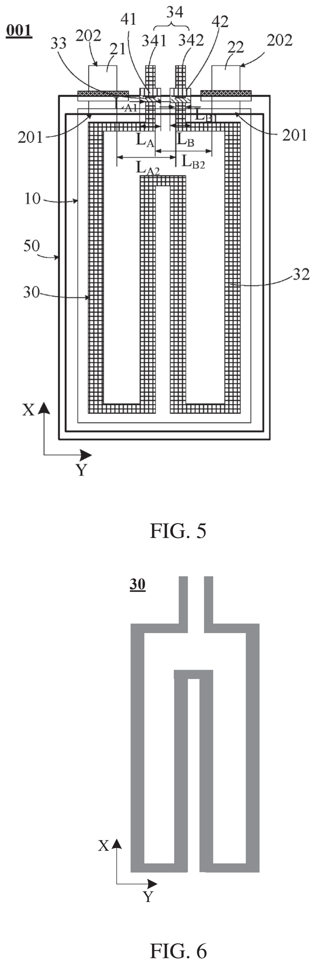

In some embodiments of this application, as shown in FIG. 5, the electrode terminal 20 includes a positive electrode terminal 21 and a negative electrode terminal 22. The extension portion 34 is located between the positive electrode terminal 21 and the negative electrode terminal 22, and the extension portion 34 includes a first extension portion 341 and a second extension portion 342, where the first extension portion 341 is adjacent to the positive electrode terminal 21, and the second extension portion 342 is adjacent to the negative electrode terminal 22. The sealing layer 40 includes a first sealing layer 41 and a second sealing layer 42, where the first sealing layer 41 is disposed on a surface of the first extension portion 341, and the second sealing layer 42 is disposed on a surface of the second extension portion 342. In the width direction as the direction Y of the electrode assembly 10, a width of the first sealing layer 41 is L_{A}, a width of the first extension portion 341 is L_{A1}, a minimum distance between the positive electrode terminal 21 and the second extension portion 342 is L_{A2}, and L_{A1}<L_{A}<L_{A2}; and a width of the second sealing layer 42 is L_{B}, a width of the second extension portion 342 is L_{B1}, a minimum distance between the negative electrode terminal 22 and the first extension portion 341 is L_{B2}, and L_{B1}<L_{B}<L_{B2}. In this application, L_{A} and L_{B} are related to a width of the secondary battery and a width of the electrode terminal, and can be selected by persons skilled in the art based on actual situations, provided that the objectives of this application can be achieved. L_{A1} and L_{A2} are not particularly limited in this application, provided that the objectives of this application can be achieved. For example, L_{A2}=width of electrode assembly-width of positive electrode terminal-width of negative electrode terminal-width of first extension portion-6 mm. L_{B1} and L_{B2} are not particularly limited in this application, provided that the objectives of this application can be achieved. For example, L_{B2}=the width of the electrode assembly-the width of the positive electrode terminal-the width of the negative electrode terminal-the width of the second extension portion-6 mm. 6 mm typically refers to the sum of a minimum distance between the positive electrode terminal and an edge of the electrode assembly and a minimum distance between the negative electrode terminal and the edge of the electrode assembly in the width direction as the direction Y. Controlling the relationship of L_{A}, L_{A1}, and L_{A2} and the relationship of L_{B}, L_{B1}, and L_{B2} within the above ranges is conducive to achieving a good sealing effect on the electrode terminal of the secondary battery, thereby reducing the risk of leakage of the electrolyte in the secondary battery.

In some embodiments of this application, as shown in FIG. 3 and FIG. 4, a thickness of each of the body portion 32, the sealing portion 33, and the extension portion 34 is t₁, and 10 µm≤t₁≤300 µm. Preferably, 20 µm≤t₁≤50 µm. For example, t₁ is 10 µm, 15 µm, 20 µm, 30 µm, 40 µm, 50 µm, 100 µm, 150 µm, 200 µm, 250 µm, 300 µm, or any value within a range defined by any two of these values. In this application, unless otherwise specified, the thicknesses of the body portion 32, the sealing portion 33, and the extension portion 34 are the same and are each t₁. Controlling the thickness of each of the body portion 32, the sealing portion 33, and the extension portion 34 within the above range is conducive to reducing the loss of energy density caused by the increase in the volume of the secondary battery while allowing the heating module to have a good heating effect on the secondary battery. Thus, the secondary battery has good cycling performance and high energy density at low temperatures.

In some embodiments of this application, a total thickness of the insulation layer 31 is t₂, and 10 µm≤t₂≤300 µm. Preferably, 10 µm≤t₂≤150 µm. For example, t₂ is 10 µm, 30 µm, 50 µm, 100 µm, 150 µm, 200 µm, 250 µm, 300 µm, or any value within a range defined by any two of these values. As shown in FIG. 3 and FIG. 4, a single-layer thickness of the insulation layer 31 is t₂/2, and the total thickness t₂ of the insulation layer 31 is the sum of thicknesses of two single layers of the insulation layer 31. Controlling the thickness of the insulation layer within the above range is conducive to reducing the loss of energy density caused by the increase in the volume of the secondary battery while allowing the heating module to have a good heating effect on the secondary battery. Thus, the secondary battery has good cycling performance and high energy density at low temperatures.

In some embodiments of this application, as shown in FIG. 3 and FIG. 4, a thickness of the sealing layer 40 is t₃, and 0.05 mm≤t₃≤1 mm. Preferably, 0.08 mm≤t₃≤0.2 mm. For example, t₃ is 0.05 mm, 0.07 mm, 0.08 mm, 0.1 mm, 0.15 mm, 0.2 mm, 0.4 mm, 0.6 mm, 0.8 mm, 1 mm, or any value within a range defined by any two of these values. It should be noted that the thickness of the sealing layer 40 should be understood as a thickness of a single sealing layer 40. Controlling the thickness of the sealing layer within the above range is conducive to reducing the loss of energy density caused by the increase in the volume of the secondary battery while allowing the heating module to have a good heating effect on the secondary battery. Thus, the secondary battery has good cycling performance and high energy density at low temperatures.

In some embodiments of this application, a material of each of the body portion and the sealing portion includes at least one of nickel, nickel-aluminum alloy, copper, copper alloy, polyimide, silicone, paraffin-expanded graphite composite, calcium chloride hydrate, or sodium sulfate hydrate. It should be noted that the body portion and the sealing portion are typically formed integrally, so the materials of the two are typically the same. The material of the extension portion is not particularly limited and may be the same as or different from the materials of the body portion and the sealing portion, provided that the material of the extension portion has a conductive effect and can achieve the objectives of this application. A material of the insulation layer includes at least one of unmodified polypropylene, transparent modified polypropylene, high melt strength polypropylene, polyethylene, low-density polyethylene, linear low-density polyethylene, polyvinylidene fluoride-hexafluoropropylene, polyvinylidene fluoride, polyacrylonitrile, polymethyl methacrylate, polyphenylene oxide, polypropylene carbonate, polyethylene oxide, polyimide, unmodified polyamide, polypeptide-modified polyamide, polyethylene glycol-modified polyamide, epoxy resin, polyurethane, amino resin, phenolic resin, acrylic resin, furan resin, resorcinol-formaldehyde resin, xylene-formaldehyde resin, vinyl resin, epoxy resin, phenolic resin, polyurethane ethyl carbamate, urea formaldehyde resin adhesive, ethylene-vinyl acetate copolymer, copolyamide, polyethylene terephthalate, styrene-butadiene-styrene block copolymer, styrene-isoprene-styrene block copolymer, reactive polyurethane, acetal resin, neoprene rubber, polyvinyl chloride, polybutene, or styrene-butadiene rubber. A material of the sealing layer includes at least one of unmodified polypropylene, crosslinked modified polypropylene, polyethylene, ethylene-butene copolymer, ethylene-isoprene copolymer, propylene-butene copolymer, or propylene-isoprene copolymer. **It** should be noted that in this application, unless otherwise specified, "unmodified polypropylene" refers to conventional unmodified polypropylene that is well-known in the art and can be purchased from manufacturers; "polyethylene" refers to conventional polyethylene that is well-known in the art and can be purchased from manufacturers; and "unmodified polyamide" refers to conventional unmodified polyamide that is well-known in the art and can be purchased from manufacturers. The above types of materials of the heating module have good thermal conductivity. The material of the insulation layer has good insulation and heat sealability. The material of the sealing layer has good insulation and heat sealability. When the above materials are used in secondary battery, the heating module has good integrated insulation and good thermal conductivity. Thus, this is conducive to alleviating the problem of corrosion on the heating module caused by the heating circuit in the secondary battery while allowing the heating module to have a good heating effect on the secondary battery, thereby improving the cycling performance and safety performance of the secondary battery.

In some embodiments of this application, the sealing layer is also disposed on part or all of a surface of the insulation layer disposed on the body portion. Thus, this is conducive to further improving the insulation of the body portion and extending the corrosion resistance life of the overlapping region. Thus, this is conducive to further alleviating the problem of corrosion on the heating module caused by the heating circuit in the secondary battery while allowing the heating module to have a good heating effect on the secondary battery, thereby further improving the cycling performance and safety performance of the secondary battery.

In some embodiments of this application, the secondary battery includes at least two electrode assemblies, and the electrode assemblies are connected in series and/or in parallel. In these embodiments, the provision of the heating module in this application improves the total voltage stability of the secondary battery, thereby alleviating the self-discharge of the secondary battery.

The electrode assembly in this application includes a positive electrode plate, a negative electrode plate, and a separator. The separator is disposed between the positive electrode plate and the negative electrode plate to separate the positive electrode plate from the negative electrode plate, prevent internal short circuits of the secondary battery, and allow for free passage of electrolyte ions, without affecting an electrochemical charge and discharge process. A structure of the electrode assembly is not particularly limited in this application, provided that the objectives of this application can be achieved. For example, the structure of the electrode assembly includes a laminated structure or a wound structure. The positive electrode plate, negative electrode plate, and separator in the electrode assembly are not limited to any particular quantity in this application, provided that the objectives of this application can be achieved. The positive electrode plate, the negative electrode plate, and the separator are not limited to any particular type in this application, provided that the objectives of this application can be achieved.

In this application, the positive electrode terminal is led from the positive electrode plate, and the negative electrode terminal is led from the negative electrode plate. Materials of the positive electrode terminal and the negative electrode terminal are not particularly limited in this application, provided that the objectives of this application can be achieved. For example, the material of the positive electrode terminal may include but is not limited to at least one of aluminum (Al) or aluminum alloy, and the material of the negative electrode terminal may include but is not limited to at least one of nickel (Ni), copper (Cu), or nickel-plated copper (Ni-Cu).

The type of the packaging bag is not particularly limited in this application, provided that the objectives of this application can be achieved. For example, the packaging bag may be an aluminum-plastic film or a steel shell.

The secondary battery in this application further includes an electrolyte. The type of the electrolyte is not particularly limited in this application, provided that the objectives of this application can be achieved. The electrolyte is accommodated in the packaging bag.

The type of the secondary battery is not particularly limited in this application, and the secondary battery may include any apparatus in which electrochemical reactions take place. For example, the secondary battery may include but is not limited to a lithium metal secondary battery, a lithium-ion secondary battery (lithium-ion battery), a sodium-ion secondary battery (sodium-ion battery), a lithium polymer secondary battery, or a lithium-ion polymer secondary battery.

A preparation process of the secondary battery in this application is well known to persons skilled in the art and is not particularly limited in this application. For example, in some embodiments of this application, the preparation process may include but is not limited to the following steps: The positive electrode plate, the heating module, the separator, and the negative electrode plate are stacked sequentially; or the positive electrode plate, the separator, the heating module, and the negative electrode plate are stacked sequentially. The resulting stack is subjected to operations such as winding or folding based on the needs to obtain an electrode assembly with a wound structure. Then, the electrode assembly is placed into the packaging bag, the electrolyte is injected into the packaging bag, and sealing is performed to obtain the secondary battery. In some other embodiments of this application, the positive electrode plate, the heating module, the separator, and the negative electrode plate are stacked sequentially; or the positive electrode plate, the separator, the heating module, and the negative electrode plate are stacked sequentially. Then, four corners of the entire laminated structure are fastened by an adhesive tape to obtain an electrode assembly with the laminated structure. Then, the electrode assembly is placed into the packaging bag, the electrolyte is injected into the packaging bag, and sealing is performed to obtain the secondary battery. In still some other embodiments of this application, the preparation process of the secondary battery may include but is not limited to the following steps: The positive electrode plate, the separator, and the negative electrode plate are stacked sequentially, and the resulting stack is subjected to operations such as winding or folding based on the needs to obtain an electrode assembly with a wound structure. Then, the electrode assembly is placed into the packaging bag with the heating module placed, the electrolyte is injected into the packaging bag, and sealing is performed to obtain the secondary battery. In yet still some other embodiments of this application, the preparation process of the secondary battery may include but is not limited to the following steps: The positive electrode plate, the separator, and the negative electrode plate are stacked sequentially. Then, four corners of the entire laminated structure are fastened by an adhesive tape to obtain an electrode assembly with the laminated structure. Then, the electrode assembly is placed into the packaging bag with the heating module placed, the electrolyte is injected into the packaging bag, and sealing is performed to obtain the secondary battery.

According to a second aspect of this application, an electronic device is provided and includes a switch and the secondary battery according to any one of the foregoing embodiments, where the switch is electrically connected to the extension portion; in response to a temperature of the secondary battery being lower than a threshold, the switch is turned on, and the heating module heats the secondary battery; and in response to the temperature of the secondary battery being higher than the threshold, the switch is turned off to stop heating. The electronic device in this application has long cycle life and safety performance.

In some embodiments of this application, the above "switch" may be a charging switch. In some other embodiments of this application, the above "switch" may be a discharging switch. In still some other embodiments of this application, the above "switch" may alternatively be a separate switch distinguished from the charging switch and the discharging switch. The separate switch is specifically used to control an operating state of the heating module. When the switch is turned on, the heating module enters the operating state to heat the secondary battery; and when the switch is turned off, the heating module does not operate and stops heating the secondary battery.

In some embodiments of this application, the threshold is -15°C to 70°C. For example, the threshold is -15°C, 0°C, 15°C, 25°C, 30°C, 40°C, 50°C, 60°C, or any value within a range defined by any two of these values. Further, when the electronic device is applied to a low-temperature product, the threshold is 0°C to 25°C, a low-temperature charge/discharge capacity of the product is not enough to meet the high-power charge/discharge demand, and the product is used for heating the secondary battery when the temperature is lower than the threshold. When the electronic device is applied to a fast charging product, the threshold is 30°C to 60°C, a charging speed of the product at room temperature is slow and is not enough to meet the fast charging demand, so the product needs to be heated to a high temperature to widen a charging window, and the product is used for heating the secondary battery when the temperature is lower than the threshold. The low-temperature product is not particularly limited in this application, provided that the objectives of this application can be achieved. For example, the low-temperature product includes but is not limited to a logistics robot used in a cold storage warehouse, and a drone used in an extremely cold environment. The fast charging product is not particularly limited in this application, provided that the objectives of this application can be achieved. For example, the fast charging product includes but is not limited to a fast charging mobile phone.

In this application, the low-temperature product refers to a product whose low-temperature charge/discharge capability is not enough to meet the charge/discharge demand, and the product is used for heating the secondary battery when the temperature is lower than the threshold, where "low temperature" refers to a temperature less than or equal to -15°C. The fast charging product refers to a product whose charging speed at room temperature (such as 1C) is slow and is not enough to meet the fast charging demand, the product needs to be heated to a high temperature to widen a charging window, and the product is used for heating the secondary battery when the temperature is lower than the threshold, where "high temperature" refers to a temperature of 30°C to 70°C, preferably 30°C to 60°C.

The electronic device in this application is not particularly limited and may be any known electronic device used in the prior art. For example, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a backup power source, a motor, an automobile, a motorcycle, a motor bicycle, a bicycle, a lighting appliance, a toy, a game console, a timepiece, an electric tool, a flash lamp, a camera, a large household battery, and a lithium-ion capacitor.

### Examples

The following describes some embodiments of this application more specifically by using examples and comparative examples. Various tests and evaluations were performed in the following methods.

### Test method and equipment:

### Test of corrosion ratio of heating module:

The lithium-ion battery in each of examples and comparative examples was placed in a charging device. At -20°C, the heating circuit of the lithium-ion battery in each of examples and comparative examples was powered on and heated under a power of 50 W. Heating was performed until the surface temperature of the lithium-ion battery reached 25°C, then the lithium-ion battery was disassembled, and the heating module was removed. Observation was performed to determine whether there were yellow and/or black metal corrosion points. A corrosion area was recorded as S₁, an effective area of the heating module was recorded as S₂, and a corrosion proportion was equal to Si/S₂×100%.

### Test of thermal shrinkage rate:

The material of the insulation layer was cut into a size of length×width being 100 mm×100 mm, then was dried in a vacuum oven at 130°C for 1 h, and then taken out. The dimension in the length direction was measured and recorded as L₃. A shrinkage rate in the length direction was equal to (100-L₃)/100×100%.

### Test of cycling performance:

The lithium-ion battery in each of examples and comparative examples was placed in a charging device. At -20°C, the heating circuit of the lithium-ion battery in each of examples and comparative examples was powered on and heated under a power of 50 W. Heating was performed until the surface temperature of the lithium-ion battery reached 25°C, then the lithium-ion battery was left standing and cooled to -20°C. Then, the heating cycle was continued. The heating cycle was stopped when a heating voltage was higher than 30 V, and the final number of cycles was recorded.

A larger number of cycles indicated better cycling performance.

### Test of total voltage:

The lithium-ion batteries in Examples 2-1 to 2-4 and Comparative example 3 were selected. A positive electrode of a first electrode assembly was used as a main positive electrode, and a negative electrode of a third electrode assembly was used as a main negative electrode. A voltage between the main positive electrode and the main negative electrode was tested and used as a total voltage of the lithium-ion battery.

### Example 1-1

### <Preparation of positive electrode plate>

A positive electrode active material lithium nickel cobalt manganate, a conductive agent acetylene black, and a binder polyvinylidene fluoride (abbreviated as PVDF, with a weight-average molecular weight of 7×10⁶) were mixed at a mass ratio of 94:3:3, with N-methylpyrrolidone (NMP) added as a solvent. The resulting mixture was stirred in a vacuum mixer to obtain a positive electrode slurry with a solid content of 75wt% and a uniform system. The positive electrode slurry was uniformly applied on one surface of a positive electrode current collector aluminum foil with a thickness of 12 µm, and drying was performed at 90°C to obtain a positive electrode plate with a positive electrode active material layer (with a thickness of 110 µm) applied on one surface. Then, the foregoing steps were repeated on another surface of the aluminum foil to obtain a positive electrode plate with positive electrode active material layers applied on two surfaces. Drying was performed at 90°C, then cold pressing was performed. Then, cutting and tab welding were performed to obtain a positive electrode plate with a size of 74 mm×867 mm for later use.

### <Preparation of negative electrode plate>

A negative electrode active material artificial graphite, a conductive agent acetylene black, a binder styrene-butadiene rubber (abbreviated as SBR, with a weight-average molecular weight of 5×10⁶), and a thickener sodium carboxymethyl cellulose were mixed at a mass ratio of 96:1:1.5:1.5. Then, deionized water was added as a solvent. The resulting mixture was stirred in a vacuum mixer to obtain a negative electrode slurry with a solid content of 70wt% and a uniform system. The negative electrode slurry was uniformly applied onto one surface of a negative electrode current collector copper foil with a thickness of 8 µm and drying was performed at 90°C to obtain a negative electrode plate with a positive electrode active material layer (with a thickness of 150 µm) applied on one surface. Then, the foregoing steps were repeated on another surface of the copper foil to obtain a negative electrode plate with negative electrode active material layers applied on two surfaces. Drying was performed at 90°C, then cold pressing was performed. Then, cutting and tab welding were performed to obtain a negative electrode plate with a size of 76 mm×851 mm for later use.

### <Preparation of separator>

A porous polyethylene film with a thickness of 15 µm (manufacturer: Hunan Zhongli New Materials Co., Ltd.) was used.

### <Preparation of electrolyte>

In an environment with a water content less than 10 ppm, non-aqueous organic solvents including ethylene carbonate (EC), propylene carbonate (PC), and diethyl carbonate (DEC) were mixed at a mass ratio of 1:1:1. Then, lithium hexafluorophosphate (LiPF₆) was added into the non-aqueous organic solvents and dissolved. The resulting solution was mixed well to obtain an electrolyte, where a concentration of LiPF₆ was 1.15 mol/L.

### <Preparation of heating module>

A nickel metal plate was cut through laser to form a circuit shown in FIG. 6, and a body portion, a sealing portion, and an extension portion connected sequentially were obtained. An outer surface of the body portion and a part of a surface of the sealing portion on a connection side of the body portion were entirely covered with unmodified polypropylene (abbreviated as PP, with a weight-average molecular weight of 4.5×10⁵, T₁=120°C) by hot pressing at 130°C for 1 min to form an insulation layer. Then, the surface of the sealing portion was covered with unmodified polypropylene (abbreviated as PP, with a weight-average molecular weight of 5.5×10⁵, T₂=130°C) by hot pressing to form a sealing layer shown in FIG. 2, where an overlapping region was present between the insulation layer and the sealing layer.

A thickness t₁ of each of the body portion, the sealing portion, and the extension portion was 30 µm, a total thickness t₂ of the insulation layer was 20 µm, and a thickness t₃ of the sealing layer was 0.06 mm. A length of the overlapping region was Δh=3 mm, a length of the sealing layer 40 was h=6 mm, L=14 mm, L₁=10 mm, and L₂=25 mm.

### <Preparation of lithium-ion battery>

The prepared negative electrode plate, heating module, separator, and positive electrode plate were stacked sequentially and then wound to obtain an electrode assembly with a wound structure. The electrode assembly was placed into an aluminum-plastic film packaging bag. After drying was performed, electrolyte injection was performed. Then, processes such as vacuum sealing, standing, formation, degassing, and trimming were performed to obtain a lithium-ion battery shown in FIG. 2. An upper limit voltage for formation was 4.15 V, a formation temperature was 70°C, and a standing time in formation was 2 h.

### Examples 1-2 to 1-15

These examples were the same as Example 1-1 except that the related preparation parameters were adjusted according to Table 1.

### Example 1-16

This example was the same as Example 1-1, except that in the <Preparation of heating module>, the sealing layer was arranged as a first sealing layer and a second sealing layer shown in FIG. 5, with L_{A}=6.4 mm, L_{A1}=3 mm, L_{A2}=14.5 mm, L_{B}=6.4 mm, L_{B1}=3 mm, and L_{B2}=14.5 mm, and a lithium-ion battery shown in FIG. 4 was prepared in the <Preparation of lithium-ion battery>.

### Example 2-1

### <Preparation of lithium-ion battery>

The negative electrode plate, heating module, separator, and positive electrode plate prepared in Example 1-1 were stacked sequentially and then wound to obtain a first electrode assembly with a wound structure.

The negative electrode plate, separator, and positive electrode plate prepared in Example 1-1 were stacked sequentially and then wound to obtain a second electrode assembly and a third electrode assembly with wound structures.

The first electrode assembly was placed between the second electrode assembly and the third electrode assembly, the first electrode assembly and the second electrode assembly were connected in series, and the first electrode assembly and the third electrode assembly were connected in parallel.

The first electrode assembly, the second electrode assembly, and the third electrode assembly connected were placed into an aluminum-plastic film packaging bag. After drying was performed, electrolyte injection was performed. Then, processes such as vacuum sealing, standing, formation, degassing, and trimming were performed to obtain a lithium-ion battery shown in FIG. 2. An upper limit voltage for formation was 4.15 V, a formation temperature was 70°C, and a standing time in formation was 2 h.

### Examples 2-2 to 2-4

These examples were the same as Example 2-1 except that the related preparation parameters were adjusted according to Table 2.

### Comparative examples 1 and 2

These comparative examples were the same as Example 1-1 except that the related preparation parameters were adjusted according to Table 1.

### Comparative example 3

This comparative example was the same as Example 2-1 except that the related preparation parameters were adjusted according to Table 1.

Preparation parameters and performance parameters of examples and comparative examples are shown in Table 1 and Table 2.

**Table 1**

| | h (mm) | Δh (mm) | Material of insulation layer | T₁ (°C) | Material of sealing layer | T₂ (°C) | ΔT (°C) | Thermal shrinkage rate (%) | Corrosion proportion (%) | Cycles (cycle) |
|---|---|---|---|---|---|---|---|---|---|---|
| Example 1-1 | 6 | 3 | Unmodified PP | 120 | Unmodified PP | 130 | 10 | 2 | 0 | 406 |
| Example 1-2 | 6 | 0.2 | Unmodified PP | 120 | Unmodified PP | 130 | 10 | 2 | 0 | 107 |
| Example 1-3 | 6 | 1 | Unmodified PP | 120 | Unmodified PP | 130 | 10 | 2 | 0 | 250 |
| Example 1-4 | 6 | 6 | Unmodified PP | 120 | Unmodified PP | 130 | 10 | 2 | 0 | 445 |
| Example 1-5 | 4 | 3 | Unmodified PP | 120 | Unmodified PP | 130 | 10 | 2 | 0 | 397 |
| Example 1-6 | 8 | 3 | Unmodified PP | 120 | Unmodified PP | 130 | 10 | 2 | 0 | 385 |
| Example 1-7 | 6 | 3 | Transparent modified PP (with weight-average molecular weight=5.4x10⁵⁾ | 130 | Unmodified PP | 130 | 0 | 2 | 0 | 310 |
| Example 1-8 | 6 | 3 | Transparent modified PP (with weight-average molecular weight=5.4x10⁵) | 130 | Unmodified PP | 120 | 10 | 2 | 0 | 309 |
| Example 1-9 | 6 | 3 | Transparent modified PP (with weight-average molecular weight=5.8x10⁵) | 135 | Unmodified PP | 120 | 15 | 2 | 0 | 298 |
| Example 1-10 | 6 | 3 | High melt strength PP (with weight-average molecular weight=6.5× 10⁵) | 150 | Unmodified PP | 130 | 20 | 2 | 0 | 267 |
| Example 1-11 | 6 | 3 | Linear low-density PP (with weight-average molecular weight=3.2×10⁵) | 110 | Unmodified PP | 130 | 20 | 2 | 0 | 244 |
| Example 1-12 | 6 | 3 | Polyethylene (with weight-average molecular weight=1.7×10⁵) | 100 | Unmodified PP | 130 | 30 | 2 | 0 | 203 |
| Example 1-13 | 6 | | Linear low-density polyethylene (with weight-average molecular weight=1.8×10⁵) | 110 | Crosslinked modified PP (with weight-average molecular weight=6.8×10⁵) | 160 | 50 | 2 | 2.9 | 83 |
| Example 1-14 | 6 | 3 | Polyethylene-polypropylene mixed material doped with 30wt% glass fiber | 120 | Unmodified PP | 130 | 10 | 0 | 0 | 400 |
| Example 1-15 | 6 | 3 | Low-density polyethylene (with weight-average molecular weight=2.0×10⁵ | 120 | Unmodified PP | 130 | 10 | 3 | 0 | 300 |
| Example 1-16 | 6 | 3 | Unmodified PP | 120 | Unmodified PP | 130 | 10 | 2 | 0 | 402 |
| Comparative example 1 | 6 | 0 | Unmodified PP | 120 | Unmodified PP | 130 | 10 | 2 | 4.1 | 42 |
| Comparative example 2 | 6 | 0.05 | Unmodified PP | 120 | Unmodified PP | 130 | 10 | 2 | 3.8 | 51 |

| | | | | | | | | | | |
|---|---|---|---|---|---|---|---|---|---|---|
| Note: In Table 1, in the "polyethylene-polypropylene mixed material doped with 30wt% glass fiber" in Example 1-14, a weight-average molecular weight of the glass fiber is 158, a weight-average molecular weight of polyethylene is 2.5×10⁵, and a weight-average molecular weight of polypropylene is 4.5×10⁵. A mass ratio of the glass fiber to the polyethylene-polypropylene mixed material is 30:70. A mass ratio of polyethylene to polypropylene in the polyethylene-polypropylene mixed material is 23:77. Example 1-16 differs from Example 1-1 in that the sealing layer in Example 1-16 includes the first sealing layer and the second sealing layer. | | | | | | | | | | |

It can be seen from Examples 1-1 to 1-16 and Comparative examples 1 and 2 that in the secondary battery each of the examples of this application, the overlapping region is provided, and controlling the length Δh of the overlapping region within the range of this application allows the overlapping region to have a long corrosion resistance life, and allows the heating module to achieve the integrated insulation. When the heating module heats the secondary battery by self-heating, the corrosion proportion of the heating module is lower, and the secondary battery has more cycles, indicating that the cycling performance and safety performance of the secondary battery are improved. In contrast, in the secondary battery in each of the comparative examples, the overlapping region is not provided or the length Δh of the overlapping region is not within the range of this application, the corrosion proportion of the heating module is higher, and the secondary battery has less cycles, indicating that the cycling performance and safety performance of the secondary battery are not improved.

The length Δh of the overlapping region typically affects the cycling performance and safety performance of the secondary battery. It can be seen from Examples 1-1 to 1-4 and Comparative examples 1 and 2 that the secondary battery in which the length Δh of the overlapping region falls within the range of this application is selected, where the heating module has a lower corrosion proportion, and the secondary battery has more cycles, indicating that the secondary battery has good cycling performance and safety performance.

The length h of the sealing layer typically affects the cycling performance and safety performance of the secondary battery. It can be seen from Examples 1-1, 1-5, and 1-6 that the secondary battery in which the length h of the sealing layer falls within the range of this application is selected, where the heating module has a lower corrosion proportion, and the secondary battery has more cycles, indicating that the secondary battery has good cycling performance and safety performance.

The selection of different types of insulation layer materials and sealing layer materials affects the melting point difference ΔT between the insulation layer and the sealing layer, and the melting point difference ΔT between the insulation layer and the sealing layer typically affects the cycling performance and safety performance of the secondary battery. It can be seen from Examples 1-1 and 1-7 to 1-13 that the secondary battery in which the melting point difference ΔT between the insulation layer and the sealing layer falls within the range of this application is selected, where the heating module has a lower corrosion proportion, and the secondary battery has more cycles, indicating that the secondary battery has good cycling performance and safety performance.

The selection of different types of insulation layer materials affects the thermal shrinkage rate of the insulation layer, and the thermal shrinkage rate of the insulation layer typically affects the cycling performance and safety performance of the secondary battery. It can be seen from Examples 1-1, 1-14, and 1-15 that the secondary battery in which the thermal shrinkage rate of the insulation layer falls within the range of this application is selected, where the heating module has a lower corrosion proportion, and the secondary battery has more cycles, indicating that the secondary battery has good cycling performance and safety performance.

The sealing layer is disposed on the surfaces of both the first extension portion and the second extension portion; or the sealing layer includes the first sealing layer and the second sealing layer, where the first sealing layer is disposed on the surface of the first extension portion, and the second sealing layer is disposed on the surface of the second extension portion. This typically also affects the cycling performance and safety performance of the secondary battery. It can be seen from Examples 1-1 and 1-16 that the secondary battery in which the provision of the sealing layer falls within the range of this application is selected, where the heating module has a lower corrosion proportion, and the secondary battery has more cycles, indicating that the secondary battery has good cycling performance and safety performance.

**Table 2**

| | h (mm) | Δh (mm) | ΔT (°C) | Corrosion proportion (%) | Cycles (cycle) | Total voltage (V) | Total voltage after standing for 12 h (V) | Total voltage after standing for 7 d (V) |
|---|---|---|---|---|---|---|---|---|
| Example 2-1 | 6 | 3 | 10 | 0 | 300 | 6.40 | 6.40 | 6.40 |
| Examples 2-2 | 6 | 0.2 | 10 | 2.6 | 83 | 4.45 | 4.32 | 4.01 |
| Examples 2-3 | 6 | 1 | 10 | 1.7 | 209 | 5.34 | 4.99 | 4.30 |
| Examples 2-4 | 6 | 6 | 10 | 0 | 300 | 6.40 | 6.40 | 6.40 |
| Comparative example 3 | 6 | 0 | 10 | 8 | 0 | 6.40 | 3.11 | \ |

| | | | | | | | | |
|---|---|---|---|---|---|---|---|---|
| Note: In Table 3, "\" indicates that there is no monitoring data. The total voltage after standing for 12 h in Comparative example 3 has dropped to be less than 3.50 V, indicating that the secondary battery has a safety risk, and the total voltage data after standing for 7 d is no longer monitored. | | | | | | | | |

The secondary battery in each of Examples 2-1 to 2-4 of this application includes at least two electrode assemblies. When the electrode assemblies are connected in series and/or in parallel, the overlapping region is provided, and controlling the length Δh of the overlapping region within the range of this application allows the overlapping region to have a longer corrosion resistance life, and allows the heating module to achieve the integrated insulation. When the heating module heats the secondary battery by self-heating, the corrosion proportion of the heating module is lower, and the secondary battery has a better total voltage stability, indicating that the self-discharge of the secondary battery is alleviated. In contrast, in the secondary battery in Comparative example 3, the series-parallel connection of the electrode assemblies accelerates the corrosion on the heating module, deteriorating the total voltage stability of the secondary battery. Specifically, the total voltage after standing for 12 h of the secondary battery in Comparative example 3 drops from 6.40 V to 3.11 V, with a drop of 3.29 V, showing a significant drop. This indicates that the self-discharge of the secondary battery is not alleviated. The inventors have found through research that this may be because the series-parallel connection of the electrode assemblies causes the secondary battery to continuously discharge the heating module through the circuit, the reaction time of the actual corrosion point in the heating module is extended, and the corrosion velocity is increased.

It should be noted that relational terms such as first and second herein are only used to distinguish one entity from another entity and do not necessarily require or imply any such actual relationship or order between these entities. In addition, the terms "include", "comprise", or any other variations thereof are intended to cover a non-exclusive inclusion, so that a process, a method, an item, or equipment including a series of elements not only includes those elements but also includes other elements that are not expressly listed, or further includes elements inherent to such process, method, item, or equipment. Various embodiments in this specification are described in related manners, provided that same or similar parts of various embodiments are referred to each other. Each embodiment focuses on the difference from another embodiment.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. A secondary battery, comprising:
an electrode assembly accommodated in a packaging bag;
an electrode terminal, wherein one end of the electrode terminal is electrically connected to the electrode assembly, and another end of the electrode terminal extends out of the packaging bag;
a heating module comprising an insulation layer as well as a body portion, a sealing portion, and an extension portion sequentially connected, wherein the body portion is disposed in the electrode assembly or between the electrode assembly and the packaging bag, the sealing portion is disposed in the packaging bag, the extension portion is disposed outside the packaging bag, and the insulation layer entirely covers an outer surface of the body portion; and
a sealing layer at least partially disposed on a surface of the sealing portion and hermetically connected to the packaging bag; wherein
an overlapping region is present between the insulation layer and the sealing layer; and in the overlapping region, the insulation layer is hermetically connected to the sealing layer, and the insulation layer is located between the body portion and the sealing layer; and
along a length direction of the electrode assembly, a length of the overlapping region is Δh, a length of the sealing layer is h, and 0.1 mm≤Δh≤h.

2. The secondary battery according to claim 1, wherein h/2≤Δh≤h.

3. The secondary battery according to claim 1, wherein 4 mm≤h≤8 mm.

4. The secondary battery according to claim 1, wherein a melting point of the insulation layer is T₁, a melting point of the sealing layer is T₂, ΔT=|T₁-T₂|, and 0°C≤ΔT≤30°C.

5. The secondary battery according to claim 4, wherein 0°C≤ΔT≤15°C.

6. The secondary battery according to claim 4, wherein 100°C≤T₁≤160°C, or 110°C≤T₂≤160°C.

7. The secondary battery according to claim 6, wherein 120°C≤T₁≤150°C, or 120°C≤T₂≤150°C.

8. The secondary battery according to claim 1, wherein a thermal shrinkage rate of the insulation layer is 0% to 3%.

9. The secondary battery according to claim 1, wherein the electrode terminal comprises a positive electrode terminal and a negative electrode terminal; and the extension portion is located between the positive electrode terminal and the negative electrode terminal, and the extension portion comprises a first extension portion and a second extension portion, wherein the first extension portion is adjacent to the positive electrode terminal, and the second extension portion is adjacent to the negative electrode terminal; and
the sealing layer is disposed on surfaces of both the first extension portion and the second extension portion; and along a width direction of the electrode assembly, a width of the insulation layer is L, a maximum distance between the first extension portion and the second extension portion is L₁, a maximum distance between the positive electrode terminal and the negative electrode terminal is L₂, and L₁<L<L₂.

10. The secondary battery according to claim 1, wherein the electrode terminal comprises a positive electrode terminal and a negative electrode terminal; and the extension portion is located between the positive electrode terminal and the negative electrode terminal, and the extension portion comprises a first extension portion and a second extension portion, wherein the first extension portion is adjacent to the positive electrode terminal, and the second extension portion is adjacent to the negative electrode terminal;
the sealing layer comprises a first sealing layer and a second sealing layer, wherein the first sealing layer is disposed on a surface of the first extension portion, and the second sealing layer is disposed on a surface of the second extension portion; and
along a width direction of the electrode assembly, a width of the first sealing layer is L_{A}, a width of the first extension portion is L_{A1}, a minimum distance between the positive electrode terminal and the second extension portion is L_{A2}, and L_{A1}<L_{A}<L_{A2}; and a width of the second sealing layer is L_{B}, a width of the second extension portion is L_{B1}, a minimum distance between the negative electrode terminal and the first extension portion is L_{B2}, and L_{B1}<L_{B}<L_{B2}.

11. The secondary battery according to claim 1, wherein
a thickness of each of the body portion, the sealing portion, and the extension portion is t₁, and 10 µm≤t₁≤300 µm; or
a total thickness of the insulation layer is t₂, and 10 µm≤t₂≤300 µm; or
a thickness of the sealing layer is t₃, and 0.05 mm≤t₃≤1 mm.

12. The secondary battery according to claim 11, wherein 20 µm≤t₁≤50 µm, 10 µm≤t₂≤150 µm, and 0.08 mm≤t₃≤0.2 mm.

13. The secondary battery according to claim 1, wherein a material of each of the body portion and the sealing portion comprises at least one of nickel, nickel-aluminum alloy, copper, copper alloy, polyimide, silicone paraffin-expanded graphite composite, calcium chloride hydrate, or sodium sulfate hydrate;
a material of the insulation layer comprises at least one of unmodified polypropylene, transparent modified polypropylene, high melt strength polypropylene, polyethylene, low-density polyethylene, linear low-density polyethylene, polyvinylidene fluoride-hexafluoropropylene, polyvinylidene fluoride, polyacrylonitrile, polymethyl methacrylate, polyphenylene oxide, polypropylene carbonate, polyethylene oxide, polyimide, unmodified polyamide, polypeptide-modified polyamide, polyethylene glycol-modified polyamide, epoxy resin, polyurethane, amino resin, phenolic resin, acrylic resin, furan resin, resorcinol-formaldehyde resin, xylene-formaldehyde resin, vinyl resin, epoxy resin, phenolic resin, polyurethane ethyl carbamate, urea formaldehyde resin, ethylene-vinyl acetate copolymer hot melt adhesive, copolyamide, polyethylene terephthalate, styrene-butadiene-styrene block copolymer, styrene-isoprene-styrene block copolymer, reactive polyurethane, acetal resin, neoprene rubber, polyvinyl chloride, polybutene, or styrene-butadiene rubber; and
a material of the sealing layer comprises at least one of unmodified polypropylene, crosslinked modified polypropylene, polyethylene, ethylene-butene copolymer, ethylene-isoprene copolymer, propylene-butene copolymer, or propylene-isoprene copolymer.

14. An electronic device, comprising a switch and the secondary battery according to any one of claims 1 to 13, wherein the switch is electrically connected to the extension portion; in response to a temperature of the secondary battery being lower than a threshold, the switch is turned on, and the heating module heats the secondary battery; and in response to the temperature of the secondary battery being higher than the threshold, the switch is turned off to stop heating.

15. The electronic device according to claim 14, wherein the threshold is -15°C to 70°C.

16. The electronic device according to claim 15, wherein when the electronic device is applied to a low-temperature product, the threshold is 0°C to 25°C; and
when the electronic device is applied to a fast charging product, the threshold is 30°C to 60°C.
